# EUROPEAN PATENT APPLICATION

(11) **EP 2 130 576 A1**
(43) Date of publication of application: **09.12.2009**
(21) Application number: 09161814.0
(22) Date of filing: 03.06.2009
(51) Int. Cl.: B01D 45/08, B01D 50/00

(54) **Improved droplet separator for cooling towers**

(30) Priority: 04.06.2008 IT MI20081024
(71) Applicant: Mosiewicz, Jerzy, 20121 Milano (IT)
(72) Inventor: Mosiewicz, Jerzy, 20121 Milano (IT)
(74) Representative: Borsano, Corrado

(57) **Abstract**

Droplet separator for cooling towers suitable to increase recovery of the droplets entrained by the cooling air exiting from the evaporation tower, comprising at least two pluralities of fins 21 and 22 between which a randomized wire mesh pad 1 is interposed for recovery of droplets of small dimension.

## Description

### Field of the invention

The present invention relates to a droplet separator for cooling towers.

### State of the art

In cooling towers cooling is achieved by spraying the cooling liquid onto a heat exchange pack while in the opposite direction or perpendicularly, forced or natural ventilation is produced, respectively counter-current or with cross-current with respect to the movement of the fluid to be cooled.

Some droplets of said liquid, generally water, are therefore removed from the flow due to the ventilation and, therefore, a part of these droplets is recovered by means of recovery devices called droplet separators.

The growing shortage of water leads to a demand for increasing efficient recovery mechanisms, with all the more reason in the case of corrosive waters used more and more often in cooling systems, such as brackish or sea water.

The objective of capturing water droplets is achieved by forcing the air that entrains the droplets to pass through a channelling device formed of winding sections, typically comprising one or more elbow bends, before exiting from the top of the cooling tower.

Particularly winding paths increase the probability of collision between water droplets, which thus coalesce to form increasingly heavy drops, to the point that the upwards thrust, imparted by the flow of air generated by forced or natural ventilation, can no longer prevail over gravitational attraction, and therefore the droplets fall back into the tower. Analogously, a sudden change in the direction of flow causes the droplets to impact the lateral surfaces of the flow channel, remaining adherent thereto. In this manner, gravity is favoured and the intercepted droplet is able to fall back into the tower.

Very small droplets can therefore only be captured through a winding channel.

A partial solution to the problem has been identified in the prior art by using a randomized wire mesh pad, i.e. formed by a sort of random tangle of wires, which although maintaining load losses low, allows a large number of small droplets to be captured. These droplets, running downward on the wires with which they have collided, coalesce with one another, detaching from the wires in the sections in which wires assume a greater downward curvature. Said pad, more or less flat in shape, is normally laid above the channelling fins, so as to restrain the droplets which have escaped therefrom.

Therefore, a persistent film of water forms on the randomized wires of the pad, which cyclically breaks some droplets, which may be large in size, to escape from the tower.

A consequence of this problem is that the escape of the droplets from the tower increases the risk of plant personnel being exposed to Legionnaire's disease.

On the other hand, positioning of the pad below the channelling fins causes considerable head losses, as the air, excessively loaded with water, impregnates the pad, clogging it.

### Summary of the invention

The object of the present invention is to provide an improved droplet separator for cooling towers.

The present invention therefore intends to achieve the aforesaid objects, through an improved droplet separator for cooling towers, which in conformity to claim 1, comprises a first plurality of fins (21 or 22) and a pad (1), **characterized in that** it comprises at least a second plurality of fins (21 or 22), the pad being interposed between said first and second plurality of fins (21 or 22).

Advantageously, said droplet separator offers improved efficiency in recovering the liquid sprayed onto the condenser of a cooling tower without causing further head losses.

The dependent claims describe preferred embodiments of the invention, forming an integral part of the present description.

### Brief description of the figures

Further features and advantages of the invention will be more apparent in the light of the detailed description of a preferred, but not exclusive, embodiment of an improved droplet separator for cooling towers, shown by way of non-limiting example with the aid of the accompanying drawings, wherein:

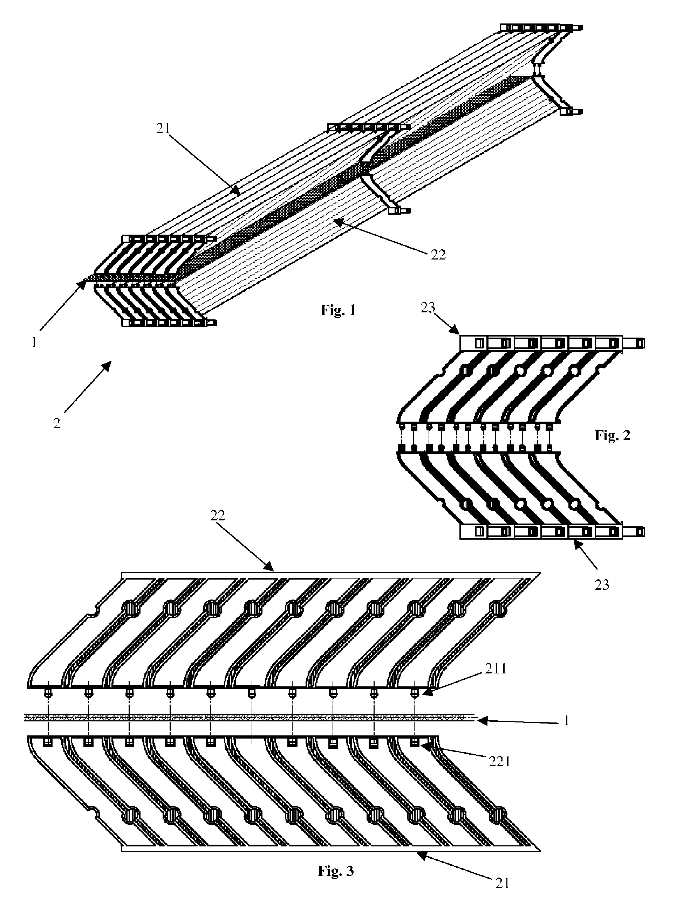

Fig. 1 shows a channelling device comprising said improved pad and fins defining winding paths;
Figs. 2 and 3 show a vertical section of a channelling device comprising fins defining winding paths, with assembly means highlighted.

The same reference numbers and letters in the figures identify the same elements or components.

### Detailed description of a preferred embodiment of the invention

A channelling device or droplet separator produced in conformity with the present invention comprises a pad 1 interposed between a first plurality of channelling fins 21 and a second plurality of channelling fins 22.

Each of said two pluralities are assembled through connection means 23 which allow correct spacing between two consecutive fins belonging to the same plurality.

Juxtapositioning of a fin belonging to the first plurality with a fin belonging to the second plurality of fins produces a profile of a fin comprising at least one elbow bend of total length comparable to the fins of known channelling devices.

In particular, at least a portion of fin belonging to one plurality extends at a different angle to the corresponding fin belonging to the other plurality for the reasons to be explained below.

In a preferred example, juxtapositioning is ensured by a crest which is inserted in a slot or, according to another example, as represented in the figures, by at least one pin 211 which is inserted in the corresponding seat 221.

Therefore, interpositioning of the pad 1 between the pluralities 22 and 22 of fins means that the fluid striking it has already lost the portion of droplets with the largest size through collision with the first plurality of fins it encounters on its channelled path, i.e. 22. Moreover, when a thin film of liquid forms on the wire mesh surface of the pad and some droplets are entrained upward, they encounter the second plurality of fins 21, which, as stated previously, define a path with different curve/orientation to the one defined by the first plurality, so that the impact of said thrown droplets with said fins is inevitable, increasing coalescence and the quantity of water returned downward.

Therefore, the benefits of this solution are found in the reduction of water lost through entrainment from the channelling device, which although ensuring greater efficiency does not cause further significant head losses in relation to the cooling fluid of the tower.

A further advantage lies in the fact that a similar channelling device, decreasing the expulsion of droplets of water from the cooling tower to a minimum, limits bacteria such as those causing Legionnaire's disease inside the cooling tower, increasing the safety of personnel operating in the vicinity of the cooling tower.

Therefore, a preferred method for producing a channelling device or droplet separator for cooling towers comprises a step in which a flat pad is interposed between two pluralities of fins.

The particular methods described herein do not limit the content of this application which covers all variants of the invention defined by the claims.

## Claims

1. An improved droplet separator for cooling towers, comprising a first plurality of fins (21 or 22) and a pad (1), **characterized in that** it comprises at least a second plurality of fins (22 or 21), the pad being interposed between said first and second plurality of fins (21 and 22).

2. The device according to claim 1, wherein said first and second plurality of fins (21 and 22) are suitable to be juxtaposed so as to define channelling paths comprising, each, at least one bend.

3. The device according to claim 2, wherein said first and second plurality of fins are juxtaposed, at least one portion of the first part of the channelling path defined by said first plurality of fins (21 or 22) is oriented with a different angle to the second part of the channelling path defined by said second plurality of fins (22 or 21).

4. The device according to claim 3, further comprising assembly means (211, 221, 23) suitable to constrain each fin belonging to said first plurality of fins (21 or 22) with one belonging to said second plurality of fins (22 or 21) and to mutually constrain fins belonging to the same plurality.

5. A cooling tower comprising a channelling device, according to any one of claims 1 to 5.
